# EUROPÄISCHE PATENTSCHRIFT

(11) **EP 0 575 780 B1**
(45) Veröffentlichungstag und Bekanntmachung des Hinweises auf die Patenterteilung: **26.07.1995**
(21) Anmeldenummer: 93108708.4
(22) Anmeldetag: 28.05.1993
(51) Int. Cl.: B64C 1/14, B60J 1/16, E06B 3/46

(54) **Schiebefensteranordnung, insbesondere für Flugzeugkanzeln**
Sliding window, particularly for aircraft canopy
Fenêtre coulissante, notamment pour carlingue d'aéronef

(30) Priorität: 24.06.1992 DE 4220600
(43) Veröffentlichungstag der Anmeldung: 29.12.1993
(73) Patentinhaber: JOSEF WEISS PLASTIC GmbH, W-8000 München 90 (DE)
(72) Erfinder: Strehler, Josef, W-8901 Kissing (DE); Maerz, Herrman, W-8000 München 83 (DE)
(74) Vertreter: Herrmann-Trentepohl, Werner, Dipl.-Ing.

(56) Entgegenhaltungen:
- DE-U- 8 610 239
- GB-A- 541 565
- US-A- 2 959 827
- US-A- 3 510 983

## Beschreibung

Die Erfindung betrifft eine Schiebefensteranordnung, insbesondere für Flugzeugkanzeln, entsprechend dem Oberbegriff des Patentanspruchs 1.

Die im allgemeinen aus Acrylglas bestehende Kanzel eines Flugzeuges weist vielfach mindestens ein Schiebefenster auf. Beim Durchgreifen durch das von außen geöffnete Schiebefenster kann die Entriegelungsvorrichtung für die Kanzel betätigt werden. Darüberhinaus wird das Schiebefenster zur Belüftung des Kanzelinneren in bestimmten Flugphasen benötigt. So kann es bei einem Absteigen aus größeren Flughöhen vorkommen, daß die Kanzel aufgrund der sich ändernden klimatischen Bedingungen von innen beschlägt. Da eine Innenbelüftung oder eine Klimaanlage aus Kosten- und Gewichtsgründen oft nicht vorhanden ist, muß eine Belüftung durch öffnen des Fensters erfolgen.

Bei luftdicht abgeschlossenen Kanzeln ist in größeren Flughöhen der Innendruck höher als der Außendruck. Das Schiebefenster wird dabei durch den Innendruck dichtend gegen die Fensteröffnung gedrückt, die es mit einem abgestuften Rand von innnen übergreift. Bei einem Wechsel zu niedrigeren Höhen muß ein Druckausgleich geschaffen werden, was nicht zu schnell erfolgen darf, um gesundheitliche Gefahren für die Flugzeuginsassen und ein damit verbundenes Sicherheitsrisiko bei dem Piloten auszuschließen. Man bewirkt deshalb den Druckausgleich nach Erreichen der niedrigen Flughöhe durch ein geringfügiges Öffnen des Fensters.

Eine bekannte Schiebefensteranordnung hat zwei Führungsleisten, die an gegenüberliegenden Seiten einer rechteckigen Fensteröffnung und in deren Verlängerung angeordnet sind und im Bereich der Fensteröffnung ein L-Profil, in der Verlängerung ein U-Profil aufweisen. In den Führungsleisten ist ein Schiebefenster geführt, das in der geschlossenen Stellung in der Fensteröffnung einrastet, wobei an den beiden geführten Längskanten des Schiebefensters Federzungen vorgesehen sind, die auf das Schiebefenster eine senkrecht zur Verschieberichtung zur Fensteröffnung hin gerichtete Andrückkraft ausüben.

Da die Federzungen nur in der Mitte der geführten Längskante des Schiebefensters angreifen, kommt es leicht zu Verkantungen, und ein dosiertes, geringfügiges Öffnen ist kaum möglich. Man hat deshalb in dem Schiebefenster noch ein kleines Ausstellfenster angeordnet, das zum Druckausgleich gegen die Flugrichtung zu öffnen ist, so daß es mit dem Staudruck beaufschlagt wird. Die Befestigung dieses Ausstellfensters muß aber schwergängig sein, um ein ungewolltes Öffnen durch die Luftströmung oder den höheren Innendruck zu verhindern. Das Ausstellfenster ist deshalb nur schwer zu betätigen. Ferner muß es vor jedem Öffnen des Schiebefensters geschlossen werden.

Die aus Federstahl bestehenden Federzungen liegen praktisch mit Linienberührung an dem Schenkel der Führungsleiste an und gewähren keinen gleichmäßigen, niedrigen Reibungswiderstand beim Verschieben des Schiebefensters. In den beiden Endstellungen des Schiebefensters können sich in der Führungsleiste infolge von Vibrationen Vertiefungen an den Auflagestellen der Federzungen bilden, die ein leichtes und ruckfreies Öffnen und Schließen des Schiebefensters weiter erschweren.

Der Erfindung liegt die Aufgabe zugrunde, eine Schiebefensteranordnung anzugeben, die ein leichtes Verschieben des Schiebefensters, auch bei sehr kurzen Verschiebewegen, ermöglicht, ein genau dosierbares Öffnen des Schiebefensters erlaubt und einem sehr geringen Verschleiß unterliegt.

Die Lösung der Aufgabe besteht entsprechend dem kennzeichnenen Teil des Anspruchs 1 darin, daß an zwei gegenüberliegenden Kanten des Schiebefensters angeordnete und in den Führungsleisten gelagerte Andrückleisten vorgesehen sind, die gegen die der Fensteröffnung gegenüberliegenden Schenkel der Führungsleisten anliegen, und daß zwischen den Andrückleisten und den Kanten des Schiebefensters mindestens eine Feder angeordnet ist.

Es ist jedoch auch denkbar, daß die Andrückleisten an den vertikalen Kanten des Schiebefensters angeordnet sind und und mit ihren Enden in die obere bzw. untere Führungsleiste eingreifen.

Die beiden Andrückleisten liegen flächig an dem Schenkel der Führungsleiste an und erzeugen somit einen nur geringen Flächendruck. Da sie selbst keine Federungseigenschaften besitzen, können sie ebenso wie die Führungsleisten aus einem Kunststoff, bevorzugt Acrylglas oder Polycarbonat, hergestellt sein und damit einen niedrigen Reibungskoeffizienten aufweisen.

Die Längserstreckung der Andrückleiste parallel zu der Kante des Schiebefensters ermöglicht es, durch die Gestaltung der Schenkel an der Führungsleiste die von der Führungsleiste auf das Schiebefenster übertragene Andruckkraft der jeweiligen Öffnungsstellung anzupassen. So kann der der Fensteröffnung gegenüberliegende Schenkel der Führungsleisten im Bereich der Fensteröffnung rampenartig verdickt sein und die rampenartige Verdickung mit einer Abschrägung in den nicht verdickten, in der Verlängerung der Fensteröffnung liegenden Bereich übergehen, wobei die Breite der rampenartigen Verdickung in Schließrichtung des Schiebefensters abnimmt. Dadurch wird das Schiebefenster beim Schließen zunächst mit erhöhtem Druck in die Fensteröffnung gedrückt, so daß es sicher eingreift, während beim weiteren Verschieben in Schließrichtung der Andruck und damit der Verschiebewiderstand verringert wird.

Ein entsprechender Effekt wird beim Öffnen erreicht, wenn der in der Verlängerung der Fensteröffnung vorgesehene U-Schenkel der Führungsleisten mit einer Abschrägung in den L-förmig profilierten Teil der Führungsleiste ausläuft. Die beiden Abschrägungen in den Schenkeln der Führungsleisten liegen sich somit gegenüber und bewirken ein Versetzen des Schiebefensters quer zur Schieberichtung im Verlauf des Verschiebeweges.

Die Andrückleisten haben einen quadratischen bzw. rechteckigen Querschnitt und stehen unter der Wirkung von zwei Schraubendruckfedern, die einerseits an der Längskante des Schiebefensters, andererseits an der Andrückleiste angreifen und diese gegen den Schenkel der Führungsleiste drücken. Zur Arretierung sind die Schraubenfedern vorteilhaft teilweise in Sackbohrungen der Andrückleisten bzw. des Schiebefensters aufgenommen. Ein als Steg ausgebildeter Anschlag, der in eine Nut der Andrückleiste eingreift, erlaubt eine Bewegung der Andrückleiste senkrecht zur Ebene des Schiebefensters, nicht jedoch parallel dazu.

### Weitere zweckmäßige Ausgestaltungen ergeben sich aus den Unteransprüchen

Die erfindungsgemäße Schiebefensteranordnung kann an den Kanzeln unterschiedlicher Flugzeugtypen, wie Überschallmaschinen, Sportflugzeugen und Segelflugzeugen vorgesehen werden. Darüber hinaus eignet sie sich auch für andere Einsatzgebiete, z.B. bei Kraftfahrzeugen und Motor- oder Segelbooten. Die Führungsleisten können mit der Kanzel verschraubt oder verklebt sein und werden entweder bei ihrer Herstellung oder bei der Montage an die jeweilige Krümmung der Kanzel angepaßt.

Die Erfindung wird nachfolgend an einem Ausführungsbeispiel unter Bezugnahme auf die Zeichnung erläutert. In der Zeichnung zeigen:
- Fig. 1:: eine perspektivische Teilansicht der Schiebefensteranordnung von der Innenseite der Kanzel aus gesehen;
- Fig. 2:: einen Schnitt durch die Anordnung in Höhe einer Führungsleiste mit in Schließstellung befindlichem Schiebefenster;
- Fig. 3:: einen Schnitt durch die Führungsleiste entlang der Linie III - III in Fig. 2;
- Fig. 4:: einen Schnitt durch die Führungsleiste entlang der der Linie IV - IV in Fig. 2;
- Fig. 5:: einen der Fig. 2 entsprechenden Schnitt mit teilweise geöffnetem Schiebefenster, und
- Fig. 6:: einen der Fig. 2 entsprechenden Schnitt mit vollständig geöffnetem Schiebefenster.

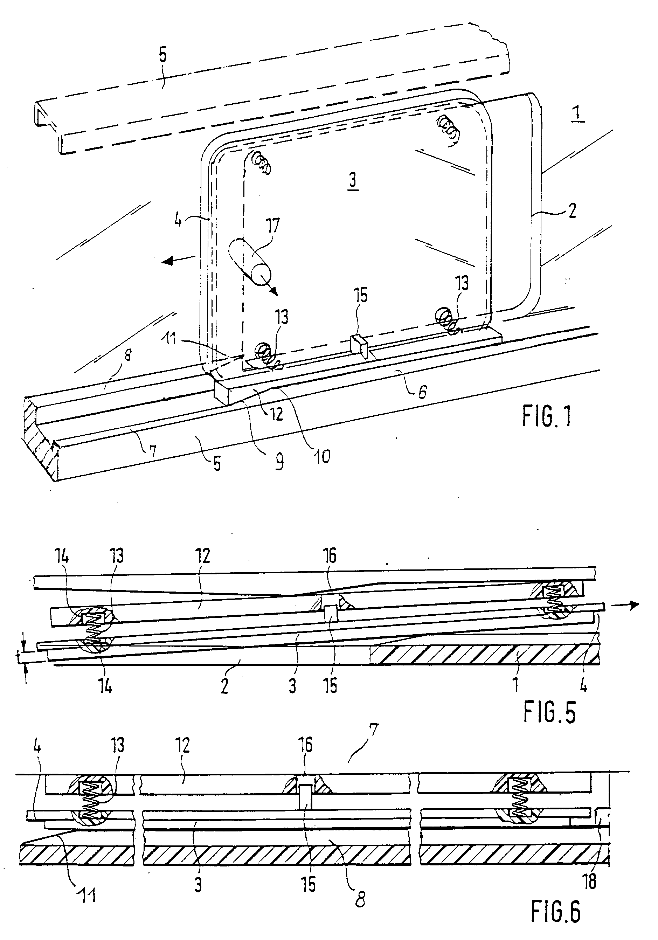

Gemäß Fig. 1 ist in der aus Acrylglas bestehenden Kanzel 1 eines Flugzeuges eines rechteckige, an den Ecken abgerundete Fensteröffnung 2 ausgespart. Die Fensteröffnung ist durch ein Schiebefenster 3 verschließbar, das von der Innenseite der Kanzel her mittels des Griffes 17 in Pfeilrichtung zu betätigen ist. Das Schiebefenster besteht ebenfalls aus Acrylglas und ist in der Zeichnung als ebenes Teil dargestellt. Es kann aber, wenn es in einem gewölbten Bereich der Kanzel eingebaut ist, an die Wölbung angepaßt sein.

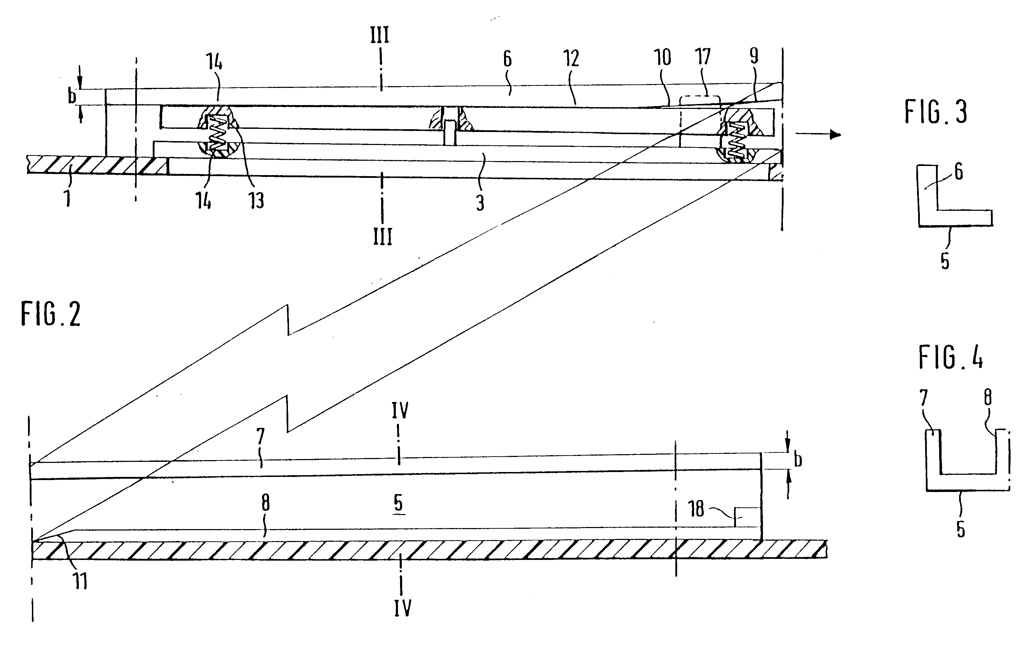

Das Schiebefenster besteht aus einem dickeren Material als die Kanzel und ist mit einer umlaufenden Abstufung 4 versehen, wobei die Tiefe t der Abstufung der Dicke des Materials der Kanzel entspricht. In der vollständig geschlossenen Stellung gemäß Fig. 2 wird der abgestufte Rand des Schiebefensters 3 von den Rändern der Fensteröffnung mit geringem Spiel umschlossen, und die Außenfläche des Schiebefensters schließt mit der Außenfläche der Kanzel bündig ab, so daß sich außen eine durchgehende Oberfläche ergibt. Der vorstehende Teil der Abstufung 4 überragt den Umfang der Fensteröffnung 2 und liegt von der Innenseite der Kanzel her dichtend an dem Randbereich der Fensteröffnung an. Ein erhöhter Innendruck in der Kanzel bewirkt demzufolge ein verstärktes Anliegen des Schiebefensters in der Fensteröffnung.

An der oberen und der unteren Längsseite der Fensteröffnung 2 ist im Inneren der Kanzel je eine Führungsleiste 5 befestigt, z.B. durch Verschraubung oder Verklebung. Die Führungsleisten sind etwas mehr als doppelt so lang wie die Längsseiten der Fensteröffnung und erstrecken sich, in Bewegungsrichtung des Flugzeuges gesehen, von der Fensteröffnung nach hinten. Im Bereich der Fensteröffnung haben die Führungsleisten ein Profil in Form eines L mit einem Schenkel 6 (Fig. 3) und daran anschließend ein Profil in Form eines U mit den Schenkeln 7 und 8 (Fig. 4). Der L-Schenkel 6 geht mit einer Abschrägung 9 in den U-Schenkel 7 über. Ferner weist der L-Schenkel 6 im Anschluß an die Abschrägung 9 eine rampenartige Verdickung 10 auf, die zum Ende der Führungsleiste 5 hin abnimmt. An diesem Ende hat der L-Schenkel 6 dieselbe Breite b wie der U-Schenkel 7 über seine gesamte Länge. Der andere U-Schenkel 8 läuft zu der Fensteröffnung 2 hin in einer Abschrägung 11 aus. Der Querschnitt der Führungsleiste 5 verengt sich von dem mit dem Anschlag 18 versehenen Ende zu ihrem anderen Ende, so daß der durch die Federn 13 erzeugte Anpreßdruck im Schließzustand des Fensters 3 erhöht ist.

Die beiden Führungsleisten 5 sind spiegelsymmetrisch ausgebildet und angeordnet. Im montierten Zustand liegen die Längsränder des Schiebefensters mit geringem Spiel gegen den jeweiligen Steg der Führungsleiste 5 an. Hierdurch wird ein leichtes Gleiten in der Führungsleiste gewährleistet, andererseits aber ein Klappern vermieden.

Das Schiebefenster 3 ist mit Hilfe von Andrückleisten 12 in den Führungsleisten geführt. Die Andrückleisten haben einen quadratischen Querschnitt und etwa die Länge der Längskanten des Schiebefensters, an denen sie auf der Innenseite des Schiebefensters angeordnet sind. In der Nähe beider Enden jeder Andrückleiste ist eine Schraubendruckfeder 13 vorgesehen, die beidseitig von Sackbohrungen 14 aufgenommen wird. Etwa in der Mitte der Längsseite des Schiebefensters ist ein Steg 15 angebracht, der mit Spiel in eine gegenüberliegende Nut 16 der Andrückleiste eingreift und eine Bewegung der Andrückleiste senkrecht zur Ebene bzw. Fläche des Schiebefensters erlaubt, ein seitliches Ausweichen parallel zu dieser Ebene aber verhindert. Bei einem Verschieben des Schiebefensters 3 wird daher die Längsbewegung über den Steg 15 und die Nut 16 auf die Andrückleiste 12 übertragen, während die elastische Andrückkraft in die Fensteröffnung 2 bzw. gegen die U-Schenkel 8 von den Schraubendruckfedern 13 bewirkt wird.

An der Innenseite des Schiebefensters 3 ist in der Nähe der in Öffnungsrichtung liegenden Kante ein Griff 17 angeordnet. Am Ende des U-förmig profilierten Teils der Führungsleisten befindet sich ein Anschlag 18.

Fig. 2 zeigt die Lage des Schiebefensters 3 in der geschlossenen Stellung. Der abgestufte Bereich liegt in der Fensteröffnung 2 und schließt bündig mit der Außenfläche der Kanzel 1 ab. Der vorstehende Rand der Abstufung 4 liegt vom Kanzelinneren her an dem Rand der Fensteröffnung 2 an. Die beiden Andrückleisten 12 werden von den Schraubendruckfedern 13 gegen den L-Schenkel 6 gedrückt, wobei aufgrund der rampenartigen Verdickung 10 das in Öffnungsrichtung (Pfeil) liegende Ende der Andrückleiste 12 dichter an dem Schiebefenster liegt als das entgegengesetzte Ende. Die das Schiebefenster in der Fensteröffnung haltende elastische Kraft ist somit an der in Öffnungsrichtung liegenden Kante größer.

Zum Öffnen wird das Schiebefenster 3 zunächst an dem Griff 17 in Richtung zur Innenseite der Kanzel hin gezogen, wobei die im Bereich der rampenartigen Verdickung 10 liegenden Schraubendruckfedern weiter zusammengedrückt werden (Fig.1). Wenn diese Bewegung aus der Fläche der Fensteröffnung hinaus das Maß t überschreitet, wird ein schmaler Spalt gebildet, durch den ein gerinfügiger Druckausgleich erfolgen kann.

Nachfolgend wird das Schiebefenster 3 in Öffnungsrichtung verschoben, wobei die obere und die untere Längskante an der Abschrägung 11 des U-Schenkels 8 entlanggleiten. Der Öffnungsspalt wird dabei allmählich vergößert. Die Andrückleiste 12 gleitet entlang der rampenartigen Verdickung 10 und der Abschrägung 9 an den U-Schenkel 7. In der Zwischenstellung gemäß Fig. 5 wie auch in allen anderen Zwischenstellungen sind dabei eine ausgeglichene Andrückkraft und ein gleichmäßiger, geringer Verschiebewiderstend gewährleistet.

In der vollständig geöffneten Stellung gemäß Fig. 6 befindet sich das Schiebefenster 3 in dem U-förmig profilierten Bereich der Führungsleisten 5. Die beiden Längskanten des Schiebefensters liegen an den U-Schenkeln 8 sowie an dem Anschlag 18, die Andrückleisten 12 an den U-Schenkeln 7 an. Die Fensteröffnung 2 ist völlig freigegeben.

Das Schließen erfolgt durch Verschieben des Schiebefensters 3 an dem Griff 17 in Schließrichtung. Dabei gleiten die Andrückleisten 12 über die Abschrägung 9 und die rampenartige Verdickung 10 auf den L-Schenkel 6. In der Endstellung erfolgt ein Einrasten des Schiebefensters 3 in der Fensteröffnung 2 unter der Wirkung der Schraubendruckfedern 13.

## Patentansprüche

1. Schiebefensteranordnung, insbesondere für Flugzeugkanzeln, mit zwei Führungsleisten (5), die an gegenüberliegenden Seiten einer Fensteröffnung (2) und in deren Verlängerung angeordnet sind und im Bereich der Fensteröffnung ein L-Profil, in der Verlängerung ein U-Profil aufweisen, mit einem mit zwei Längskanten in den Führungsleisten geführten Schiebefenster (3), das in der geschlossenen Stellung in der Fensteröffnung einrastet, und mit den geführten Längskanten des Schiebefensters zugeordneten Federn, die auf das Schiebefenster eine senkrecht zur Verschieberichtung zur Fensteröffnung hin gerichtete Andrückkraft ausüben, **dadurch gekennzeichnet**, daß an zwei gegenüberliegenden Kanten des Schiebefensters (3) angeordnete und in den Führungsleisten (5) gelagerte Andrückleisten (12) vorgesehen sind, die gegen die der Fensteröffnung (2) gegenüberliegenden Schenkel der Führungsleisten (5) anliegen, und daß zwischen den Andrückleisten (12) und den Kanten des Schiebefensters (3) mindestens eine Feder (13) angeordnet ist.

2. Schiebefensteranordnung nach Anspruch 1, **dadurch gekennzeichnet**, daß die Andrückleisten (12) parallel zu jeder geführten Längskante des Schiebefensters (3) vorgesehen sind.

3. Schiebefensteranordnung nach Anspruch 1, **dadurch gekennzeichnet**, daß der der Fensteröffnung (2) gegenüberliegende Schenkel (6) der Führungsleisten (5) im Bereich der Fensteröffnung verdickt ist.

4. Schiebefensteranordnung nach Anspruch 2, **dadurch gekennzeichnet**, daß die Verdickung mit einer Abschrägung (9) in den nicht verdickten, in der Verlängerung der Fensteröffnung (2) liegenden Bereich (7) rampenartig übergeht.

5. Schiebefensteranordnung nach Anspruch 3 oder 4, **dadurch gekennzeichnet**, daß die Breite der rampenartigen Verdickung in Schließrichtung des Schiebefensters (3) abnimmt.

6. Schiebefensteranordnung nach einem der Ansprüche 1 bis 5, **dadurch gekennzeichnet**, daß der nur in der Verlängerung der Fensteröffnung (2) vorgesehene U-Schenkel (8) der Führungsleisten (5) mit einer Abschrägung (11) in den L-förmig profilierten Teil der Führungsleiste ausläuft.

7. Schiebefensteranordnung nach einem der Ansprüche 1 bis 6, **dadurch gekennzeichnet**, daß sich die Querschnittsbreite der Führungsleisten (5) von ihrem der Kanzel (1) zugeordneten Ende zu ihrem der Fensteröffnung (2) zugeordneten Ende verkleinert, derart daß der Schließdruck in der Schließlage des Fensters (3) erhöht ist.

8. Schiebefensteranordnung nach einem der Ansprüche 1 bis 7, **dadurch gekennzeichnet**, daß die Andrückleisten (12) einen rechteckigen, insbesondere quadratischen Querschnitt aufweisen.

9. Schiebefensteranordnung nach einem der Ansprüche 1 bis 8, **dadurch gekennzeichnet**, daß zwischen jeder Andrückleiste (12) und der Innenseite des Schiebefensters (3) zwei Schraubendruckfedern (13) angeordnet sind.

10. Schiebefensteranordnung nach Anspruch 9, **dadurch gekennzeichnet**, daß die Schraubendruckfedern (13) in der Nähe der Enden der Andrückleisten (12) angeordnet sind.

11. Schiebefensteranordnung nach Anspruch 10, **dadurch gekennzeichnet**, daß die Schraubendruckfedern (13o) in Sackbohrungen (14) der Andrückleisten (12) und diesen zugeordneten Sackbohrungen (14) des Schiebefensters (3) teilweise aufgenommen sind.

12. Schiebefensteranordnung nach einem der Ansprüche 1 bis 11, **dadurch gekennzeichnet**, daß an den beiden geführten Längskanten des Schiebefensters (3) ein Anschlag vorgesehen ist, der eine Bewegung der Andrückleiste (12) senkrecht zur Ebene des Schiebefensters erlaubt, parallel dazu aber verhindert.

13. Schiebefensteranordnung nach Anspruch 12, **dadurch gekennzeichnet**, daß der Anschlag als Steg (15) ausgebildet ist, der an der Kante des Schiebefenster (3) angeordnet ist und in eine Nut (16) in der Andrückleiste (12) eingreift.

14. Schiebefensteranordnung nach einem der Ansprüche 1 bis 13, **dadurch gekennzeichnet**, daß die Materialdicke des Schiebefensters (3) größer ist als die Dicke des Materials, in dem die Fensteröffnung (2) ausgebildet ist.

15. Schiebefensteranordnung nach Anspruch 14, **dadurch gekennzeichnet**, daß das Schiebefenster (3) an den Seitenkanten eine Abstufung (4) aufweist, die in der geschlossenen Stellung von innen an der Fensteröffnung (2) anliegt, und daß die Außenfläche des Schiebefensters in der geschlossenen Stellung mit der Fläche abschließt, in der die Fensteröffnung vorgesehen ist.

16. Schiebefensteranordnung nach einem der Ansprüche 1 bis 15, **dadurch gekennzeichnet**, daß an der Innenseite des Schiebefensters (3) in der Nähe der in Öffnungsrichtung liegenden Kante ein Griff (17) vorgesehen ist.

17. Schiebefensteranordnung nach einem der Ansprüche 1 bis 16, **dadurch gekennzeichnet**, daß ein die Öffnungsbewegung des Schiebefensters (3) begrenzender Anschlag (18) vorgesehen ist.

18. Schiebefensteranordnung nach einem der Ansprüche 1 bis 17, **dadurch gekennzeichnet**, daß das die Fensteröffnung (2) aufweisende Teil, das Schiebefenster (3), die Führungsleisten (5) und die Andrückleisten (12) aus Acrylglas bestehen.

19. Schiebefensteranordnung nach einem der Ansprüche 1 bis 17, **dadurch gekennzeichnet**, daß das die Fensteröffnung (2) aufweisende Teil und das Schiebefenster (3) aus Acrylglas, die Führungsleisten (5) und/oder die Andrückleisten (12) aus Polycarbonat bestehen.

## Claims

1. Sliding-window arrangement, in particular for aeroplane cockpits, having two guide mouldings (5) which are arranged on opposite sides of a window opening (2) and in extension thereof and exhibit, in the region of the window opening, an L-profile, in extension a U-profile, having a sliding window (3) which is guided, by two longitudinal edges, in the guide mouldings and, in the closed position, latches into the window opening, and having springs which are assigned to the guided longitudinal edges of the sliding window and exert, on the sliding window, a press-on force which is directed towards the window opening, perpendicular to the displacement direction, characterized in that there are provided press-on mouldings (12) which are arranged on two opposite edges of the sliding window (3), are mounted in the guide mouldings (5) and butt against the legs, of the guide mouldings (5), located opposite the window opening (2), and in that at least one spring (13) is arranged between the press-on mouldings (12) and the edges of the sliding window (3).

2. Sliding-window arrangement according to Claim 1, characterized in that the press-on mouldings (12) are provided parallel to each guided longitudinal edge of the sliding window (3).

3. Sliding-window arrangement according to Claim 1, characterized in that the leg (6) of the guide mouldings (5) located opposite the window opening (2) is thickened in the region of the window opening.

4. Sliding-window arrangement according to Claim 2, characterized in that the thickened portion merges in a ramp-like manner, by means of a bevelled portion (9), into the non-thickened region (7) lying in extension of the window opening (2).

5. Sliding-window arrangement according to Claim 3 or 4, characterized in that the width of the ramp-like thickened portion decreases in the closure direction of the sliding window (3).

6. Sliding-window arrangement according to one of Claims 1 to 5, characterized in that the U-leg (8), of the guide mouldings (5), provided only in extension of the window opening (2) terminates with a bevelled portion (11) in that part of the guide moulding which is profiled in the form of an L.

7. Sliding-window arrangement according to one of Claims 1 to 6, characterized in that the cross-sectional width of the guide mouldings (5) decreases from its end assigned to the cockpit (1) to its end assigned to the window opening (2), such that the closure pressure in the closed position of the window (3) is increased.

8. Sliding-window arrangement according to one of Claims 1 to 7, characterized in that the press-on mouldings (12) have a rectangular, in particular square, cross-section.

9. Sliding-window arrangement according to one of Claims 1 to 8, characterized in that two helical compression springs (13) are arranged between each press-on moulding (12) and the inner side of the sliding window (3).

10. Sliding-window arrangement according to Claim 9, characterized in that the helical compression springs (13) are arranged in the vicinity of the ends of the press-on mouldings (12).

11. Sliding-window arrangement according to Claim 10, characterized in that the helical compression springs (13) are partly received in blind bores (14) of the press-on mouldings (12) and blind bores (14), assigned to the same, of the sliding window (3).

12. Sliding-window arrangement according to one of Claims 1 to 11, characterized in that there is provided, on the two guided longitudinal edges of the sliding window (3), a stop which permits a movement of the press-on moulding (12) perpendicular to the plane of the sliding window, but prevents movement parallel thereto.

13. Sliding-window arrangement according to Claim 12, characterized in that the stop is designed as a web (15) which is arranged on the edge of the sliding window (3) and engages into a groove (16) in the press-on moulding (12).

14. Sliding-window arrangement according to one of Claims 1 to 13, characterized in that the material thickness of the sliding window (3) is greater than the thickness of the material in which the window opening (2) is formed.

15. Sliding-window arrangement according to Claim 14, characterized in that, on the side edges, the sliding window (3) has a stepped portion which, in the closed position, butts against the window opening (2) from the inside, and in that, in the closed position, the outer surface of the sliding window terminates flush with the surface in which the window opening is provided.

16. Sliding-window arrangement according to one of Claims 1 to 15, characterized in that a handle (17) is provided on the inner side of the sliding window (3), in the vicinity of the edge lying in the opening direction.

17. Sliding-window arrangement according to one of Claims 1 to 16, characterized in that there is provided a stop (18) which restricts the opening movement of the sliding window (3).

18. Sliding-window arrangement according to one of Claims 1 to 17, characterized in that the part which has the window opening (2), the sliding window (3), the guide mouldings (5) and the press-on mouldings (12) consist of acrylic glass.

19. Sliding-window arrangement according to one of Claims 1 to 17, characterized in that the part which has the window opening (2) and the sliding window (3) consist of acrylic glass, and the guide mouldings (5) and/or the press-on mouldings (12) consist of polycarbonate.

## Revendications

1. Ensemble de fenêtre coulissante, notamment pour carlingue d'aéronef, avec deux barres de guidage (5), qui sont placées sur des côtés opposés d'une ouverture de fenêtre (2) et dans leurs prolongements, et présentent un profil en L au niveau de la fenêtre et un profil en U dans le prolongement, avec une fenêtre coulissante (3) qui, dans la position fermée, s'emboîte dans l'ouverture de fenêtre, et avec des ressorts associés aux bords longitudinaux guidés de la fenêtre coulissante, qui exercent sur la fenêtre coulissante une force de poussée dirigée vers l'ouverture de fenêtre perpendiculairement à la direction de coulissement, caractérisé en ce que des barres de pression (12) placées sur deux bords opposés de la fenêtre coulissante (3) et soutenues par les barres de guidage (5) sont prévues, qui reposent contre le flanc des barres de guidage (5) opposé à l'ouverture de fenêtre (2), et en ce qu'au moins un ressort (13) est placé entre les barres de pression (12) et les bords de la fenêtre coulissante (3).

2. Ensemble de fenêtre coulissante selon la revendication 1, caractérisé en ce que les barres de pression (12) sont prévues parallèles à chaque bord longitudinal guidé de la fenêtre coulissante (3).

3. Ensemble de fenêtre coulissante selon la revendication 1, caractérisé en ce que le flanc (6) des barres de guidage (5) opposé à l'ouverture de fenêtre (2) est épaissi au niveau de l'ouverture de fenêtre.

4. Ensemble de fenêtre coulissante selon la revendication 2, caractérisé en ce que l'épaississement se raccorde en forme de rampe, avec un biseautage (9), à la partie (7) non épaissie située dans le prolongement de l'ouverture de fenêtre (2).

5. Ensemble de fenêtre coulissante selon la revendication 3 ou 4, caractérisé en ce que la largeur de l'épaississement en forme de rampe diminue dans la direction de fermeture de la fenêtre coulissante (3).

6. Ensemble de fenêtre coulissante selon l'une des revendications 1 à 5, caractérisé en ce que le profil en U (8) des barres de guidage (5) prévu seulement dans le prolongement de l'ouverture de fenêtre (2) se raccorde avec un biseautage (11) à la partie de la barre de guidage profilée en forme de L.

7. Ensemble de fenêtre coulissante selon l'une des revendications 1 à 6, caractérisé en ce que la largeur de section des barres de guidage (5) se réduit depuis son extrémité associée (1) à la carlingue vers son extrémité associée à l'ouverture de fenêtre (2), de telle manière que la pression de fermeture est augmentée dans la position fermée de la fenêtre (3).

8. Ensemble de fenêtre coulissante selon l'une des revendications 1 à 7, caractérisé en ce que les barres de pression (12) présentent une section rectangulaire, en particulier une section carrée.

9. Ensemble de fenêtre coulissante selon l'une des revendications 1 à 8, caractérisé en ce que deux ressorts a boudin (13), travaillant en compression, sont placés entre chaque barre de pression (12) et le côté intérieur de la fenêtre coulissante (3).

10. Ensemble de fenêtre coulissante selon la revendication 9, caractérisé en ce que les ressorts à boudin (13), travaillant en compression, sont placés à proximité des extrémités des barres de pression (12).

11. Ensemble de fenêtre coulissante selon la revendication 10, caractérisé en ce que les ressorts à boudin (13 ) travaillant en compression sont logés en partie dans des trous borgnes (14) des barres de pression (12) et dans des trous borgnes (14) de la fenêtre coulissante (3) associés à ceux-ci.

12. Ensemble de fenêtre coulissante selon l'une des revendications 1 à 11, caractérisé en ce que, sur les deux bords longitudinaux guidés de la fenêtre coulissante (3), il est prévu une butée qui autorise un mouvement de la barre de pression (12) perpendiculairement au plan de la fenêtre coulissante, mais l'interdit parallèlement à ce plan.

13. Ensemble de fenêtre coulissante selon la revendication 12, caractérisé en ce que la butée est constituée d'une entretoise (15) qui est placée sur le bord de la fenêtre coulissante (3) et s'engage dans une encoche (16) dans la barre de pression (12).

14. Ensemble de fenêtre coulissante selon l'une des revendications 1 à 13, caractérisé en ce que l'épaisseur de matière de la fenêtre coulissante (3) est supérieure à l'épaisseur du matériau dans lequel est fabriquée l'ouverture de fenêtre (2).

15. Ensemble de fenêtre coulissante selon la revendication 14, caractérisé en ce que la fenêtre coulissante (3) présente sur les bords latéraux un épaulement (4) qui, dans la position fermée, repose depuis l'intérieur contre l'ouverture de fenêtre (2), et en ce que la surface extérieure de la fenêtre coulissante se raccorde, dans la position fermée, à la surface dans laquelle l'ouverture de fenêtre est prévue.

16. Ensemble de fenêtre coulissante selon l'une des revendications 1 à 15, caractérisé en ce qu'une poignée (17) est prévue du côté intérieur de la fenêtre coulissante (3) à proximité du bord situé dans la direction d'ouverture.

17. Ensemble de fenêtre coulissante selon l'une des revendications 1 à 16, caractérisé en ce qu'une butée (18) limitant le mouvement d'ouverture de la fenêtre coulissante (3) est prévue.

18. Ensemble de fenêtre coulissante selon l'une des revendications 1 à 17, caractérisé en ce que la pièce présentant l'ouverture de fenêtre (2), la fenêtre coulissante (3), les barres de guidage (5) et les barres de pression (12) sont constituées de verre acrylique.

19. Ensemble de fenêtre coulissante selon l'une des revendications 1 à 17, caractérisé en ce que la pièce présentant l'ouverture de fenêtre (2) et la fenêtre coulissante (3) sont constituées de verre acrylique, et les barres de guidage (5) et/ou les barres de pression (12) sont constituées de polycarbonate.
